(19) Europäisches Patentamt / European Patent Office / Office européen des brevets

(11) **EP 2 639 921 A2**

(12) # EUROPEAN PATENT APPLICATION

(43) Date of publication:
**18.09.2013 Bulletin 2013/38**

(51) Int Cl.:
***H02J 3/32*** (2006.01)

(21) Application number: **13158913.7**

(22) Date of filing: **13.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **15.03.2012 JP 2012058270** | (71) Applicant: **OMRON CORPORATION**<br>**Kyoto-shi, Kyoto 600-8530 (JP)**<br><br>(72) Inventor: **Yoshida, Mitsumune**<br>**Kyoto 600-8530 (JP)**<br><br>(74) Representative: **Horn Kleimann Waitzhofer**<br>**Elsenheimerstraße 65**<br>**DE-80687 München (DE)** |

(54) **Electric storage device control method, electric storage device control device, and electric storage device control system**

(57)     PROBLEM: To provide an electric storage device control method in which a discharge can be performed as an electric power assist by a simple system. MEANS FOR SOLVING: The electric storage device control method for controlling an electric storage device that supplies an electric energy stored in the electric storage device to a driving circuit of a load in addition to an electric power of an AC power system, includes the steps of: measuring a value of electric power supplied from the AC power system to the driving circuit; acquiring a waveform of a supply electric power supplied from the AC power system to the driving circuit; storing a regenerative energy from the driving circuit or a peak assist energy, which assists a peak electric power to the load, from the AC power system in the electric storage device; calculating an electric poweer threshold, at which a peak assist discharge from the electric storage device is started, based on the waveform of the supply electric power and the stored peak assist energy; and starting the peak assist discharge from the electric storage device when the measured electric power is greater than the electric power threshold.

*FIG. 2*

EP 2 639 921 A2

**Description**

SYSTEM

TECHNICAL FIELD

The present invention relates to an electric storage device control method, an electric storage device control device, and an electric storage device control system for supplying an electric energy stored in an electric storage device to a driving circuit of a load.

BACKGROUND ART

The electric storage device control device is used as a device that is connected between an AC power system and the load to assist a load power.

For example, Japanese Unexamined Patent Publication No. 2009-232526 discloses a power conversion device that assists the load power. The power conversion device is constructed by a combination of a DC power assist device and an inverter device, the DC power assist device including a boost/ step-down chopper and electric storage devices, such as an electric double layer capacitor, and the power assist is performed to the load power.

PRIOR ART DOCUMENTS

PATENT DOCUMENTS

Patent Document 1: Japanese Unexam. Patent Publication No. 2009-232526

OUTLINE OF THE INVENTION

PROBLEMS TO BE SOLVED BY THE INVENTION

However, in the power conversion device disclosed in Japanese Unexamined Patent Publication No. 2009-232526, when a discharge is performed as the power assist, momentary voltage drop of the electric power system is detected by a power running state of the load to perform the discharge. However, in the case of a large power supply capacity, it is difficult to detect the momentary voltage drop of the electric power system. That is, unfortunately it is difficult to detect discharge timing.

The present invention has been devised to solve the problems described above, and an object thereof is to provide an electric storage device control method, an electric storage device control device, and an electric storage device control system for being able to perform the discharge as the power assist by a simple method.

PROBLEMS TO BE SOLVED BY THE INVENTION

In accordance with one aspect of the present invention, there is provided an electric storage device control method for supplying an electric energy stored in an electric storage device to a driving circuit of a load in addition to an electric power of an AC power system, the electric storage device control method including the steps of: measuring a value of electric power supplied from the AC power system to the driving circuit; acquiring a waveform of a supply electric power supplied from the AC power system to the driving circuit; storing a peak assist energy in the electric storage device from a regenerative energy from the driving circuit or the AC power system, which assists a peak electric energy supplied to the load; calculating an electric power threshold, at which a peak assist discharge from the electric storage device is started, based on the waveform of the supply electric power and the stored peak assist energy; and starting the peak assist discharge from the electric storage device when the measured electric power is greater than the electric power threshold.

Preferably the electric storage device is connected to the AC power system, and the storage step includes the step of charging a portion of the peak assist energy in the electric storage device from the AC power system before the electric energy is supplied from the AC power system to the driving circuit.

Preferably the peak assist energy stored in the electric storage device is set smaller than the regenerative energy from the driving circuit.

Preferably a remaining excess energy in which the peak assist energy is subtracted from the regenerative energy is stored in the electric storage device, and the electric storage device control method further comprising the steps of: measuring the amount of the excess energy stored in the electric storage device; determining whether the amount of the excess energy stored in the electric storage device is greater than or equal to predetermined electric energy; and supplying the excess energy from the electric storage device to the driving circuit instead of the AC power system when the amount of the excess energy stored in the electric storage device is greater than or equal to the predetermined electric energy.

Preferably the predetermined electric energy is set such that the regenerative energy can be ensured from the driving circuit according to an electric storage capacity of the electric storage device.

Preferably, in the step of measuring the value of the electric power, an alternating current supplied from the AC power system to the driving circuit is measured, and calculation is performed using the measured alternating current and a predetermined voltage of the AC power system.

Preferably an output voltage and an output current of a DC circuit are measured in the step of measuring the value of the electric power, the DC circuit converting an AC voltage supplied from the AC power system provided between the AC power system and the driving circuit into a DC voltage.

In accordance with another aspect of the present invention, there is provided an electric storage device control device that supplies an electric energy stored in the electric storage device to a driving circuit of a load in addition to an electric power of an AC power system, the electric storage device control device including: an electric energy measurement part that measures a value of electric power supplied from the AC power system to the driving circuit; an electric power waveform acquisition part that acquires a waveform of a supply electric power supplied from the AC power system to the driving circuit; storing a peak assist energy in the electric storage device from a regenerative energy from the driving circuit or the AC power system, which assists a peak electric energy supplied to the load; a threshold calculator that calculates an electric power threshold, at which a peak assist discharge from the electric storage device is started, based on the waveform of the supply electric power and the stored peak assist energy; and a discharge controller that starts the peak assist discharge from the electric storage device when the electric power measured by the electric energy measurement part is greater than the electric power threshold.

In accordance with still another aspect of the present invention, there is provided an electric storage device control system including: an electric storage device; and an electric storage device control device that supplies an electric energy stored in the electric storage device to a driving circuit of a load in addition to an electric power of an AC power system, wherein the electric storage device control device includes: an electric energy measurement part that measures a value of electric power supplied from the AC power system to the driving circuit; an electric power waveform acquisition part that acquires a waveform of a supply electric power supplied from the AC power system to the driving circuit; storing a peak assist energy in the electric storage device from a regenerative energy from the driving circuit or the AC power system, which assists a peak electric energy supplied to the load; a threshold calculator that calculates an electric power threshold, at which a peak assist discharge from the electric storage device is started, based on the waveform of the supply electric power and the stored peak assist energy; and a discharge controller that starts the peak assist discharge from the electric storage device when the electric power measured by the electric power measurement part is greater than the electric power threshold.

EFFECT OF THE INVENTION

According to the present invention, the discharge can be performed as the electric energy assist by the simple system.

BRIEF DESCRIPTION OF THE DRAWINGS

FIG. 1 is a view illustrating a configuration of an electric power system according to an embodiment of the present invention;
FIG. 2 is a functional block diagram of a controller according to the embodiment;
FIGS. 3A and 3B are schematic diagrams illustrating drive of a general motor and an electric power waveform supplied from a system power supply;
FIGS. 4A and 4B are views illustrating a peak assist discharge and an excess energy discharge according to the embodiment;
FIG. 5 is a flowchart illustrating a threshold setting of an electric storage device according to the embodiment;
FIG. 6 is a view illustrating settings of a backup energy threshold and a peak assist energy threshold with respect to an electric storage capacity of the electric storage device;
FIG. 7 is a view illustrating a setting of an excess energy threshold with respect to the electric storage capacity of the electric storage device;
FIG. 8 is a flowchart illustrating calculation of a threshold of electric energy at which a peak assist discharge is started according to the embodiment;

FIG. 9 is a view illustrating an example of a supply electric power waveform in the case that the system power supply is supplied to a motor;

FIG. 10 is a view illustrating an example of modeling of the supply electric power waveform in the case that the system power supply is supplied to the motor;

FIG. 11 is a view illustrating the calculation of the threshold of the electric energy at which the peak assist discharge is started;

FIG. 12 is a flowchart illustrating an operation of an electric storage device control system according to the embodiment;

FIG. 13 is a flowchart illustrating an excess discharge mode according to the embodiment;

FIGS. 14A, 14B, and 14C are views illustrating a relationship among drive of the motor, an electric power waveform supplied from the system power supply, and an electric storage capacity of the electric storage device according to the embodiment; and

FIG. 15 is a view illustrating factory power consumption in the case of using the electric storage device control system according to the embodiment and in the case of a comparative example.

EMBODIMENTS OF THE INVENTION

Hereinafter an embodiment of the present invention will be described in detail with reference to the drawings. In the drawings, the same or corresponding component is designated by the same numeral, and the detailed description is not repeated.

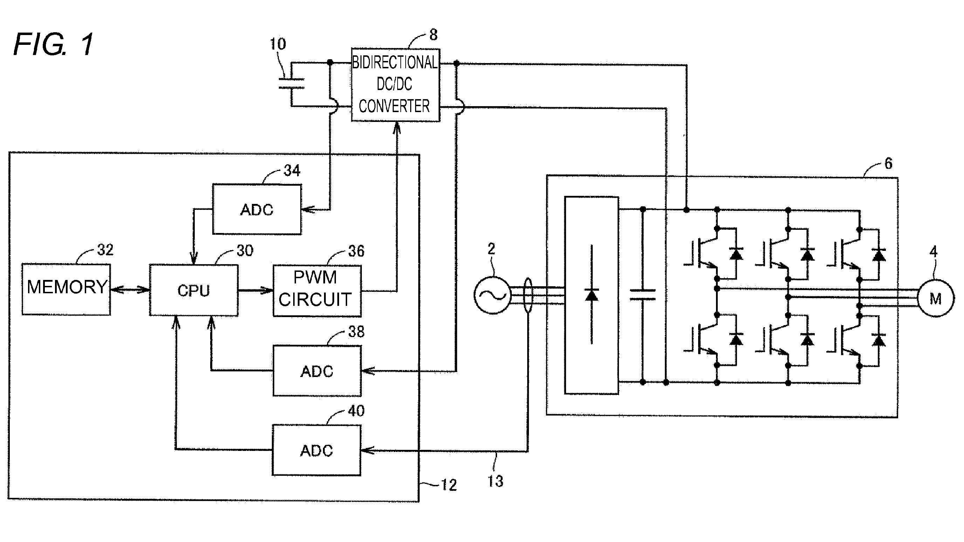

FIG. 1 is a view illustrating a configuration of an electric power system according to an embodiment of the present invention.

Referring to FIG. 1, the electric power system according to the embodiment includes an inverter 6 that is provided to drive an electric motor (motor) 4 and a system power supply 2 that is connected to the inverter 6. In the electric power system of the embodiment, an electric storage device control system is provided to assist a load power of the system power supply 2. The inverter 6 includes a circuit that converts an AC voltage from the system power supply 2 into a DC voltage. A motor control device (not illustrated) is also provided in order that the inverter 6 is controlled to control the rotation speed of the motor 4.

In the embodiment, the electric storage device control system includes a bidirectional DC/DC converter 8 that is connected to the inverter 6, an electric storage device 10 that is connected to the inverter 6 through the bidirectional DC/DC converter 8, and a controller 12 that controls the bidirectional DC/DC converter 8 to perform charge-discharge control of the electric storage device 10.

The electric storage device 10 is constructed by an Electric Double Layer Capacitor (EDLC) that can be charged and discharged.

In response to an instruction from the controller 12, the bidirectional DC/DC converter 8 discharges an electric energy stored in the electric storage device 10 to the inverter 6. In response to an instruction from the controller 12, the bidirectional DC/DC converter 8 stores a regenerative energy generated by the inverter 6 in the electric storage device 10. Because the bidirectional DC/DC converter is well known, the detailed description is omitted.

The controller 12 includes a CPU (Central Processing Unit) 30, a memory 32, Analog Digital Converters (ADCs) 34, 38, and 40, a PWM (Pulse Width Modulation) circuit 36, and a clamp type watt meter 13.

Various programs and pieces of data, which are necessary to operate the system, are stored in the memory 32.

The CPU 30 reads various programs and pieces of data stored in the memory 32, and executes the programs to perform the following flow.

The CPU 30 detects a voltage at the electric storage device 10, which is input from the ADC 34, and calculates storage electric energy based on an electric storage capacity of the electric storage device 10.

The CPU 30 detects a voltage, which is input from the ADC 38, at an internal node of the inverter 6 connected to the bidirectional DC/DC converter 8, and adjusts supply electric energy when the electric energy is discharged from the electric storage device 10 to the inverter 6 through the bidirectional DC/DC converter 8.

The clamp type watt meter 13 is provided with respect to the system power supply 2, and measures the value of the supply electric power supplied from the system power supply 2 to the inverter 6. Specifically, the clamp type watt meter 13 measures an alternating current supplied from the system power supply 2, and performs calculation based on the alternating current and a predetermined voltage supplied from the system power supply 2.

The measured value of the clamp type watt meter 13 is output to the CPU 30 through the ADC 40.

The CPU 30 controls the PWM circuit 36 that outputs a PWM signal to drive the bidirectional DC/DC converter 8. The CPU 30 controls the PWM circuit 36 to drive the bidirectional DC/DC converter 8, thereby performing the charge-discharge control of the electric storage device 10.

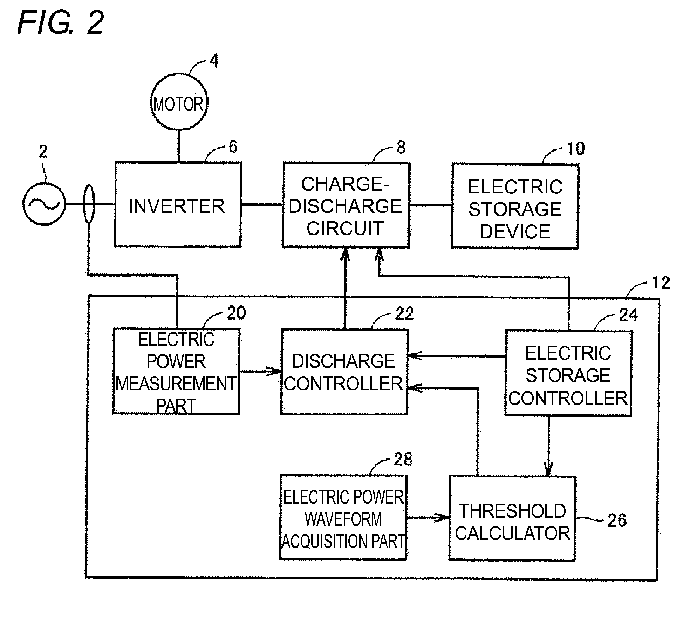

FIG. 2 is a functional block diagram of the controller 12 according to the embodiment.

Referring to FIG. 2, the controller 12 includes an electric power measurement part 20, a discharge controller 22, an electric storage controller 24, a threshold calculator 26 that calculates a threshold at which peak assist discharge is started, and an electric power waveform acquisition part 28. Each functional block is implemented by the CPU 30, the memory 32, and other peripheral circuits. The charge-discharge circuit 8 corresponds to the bidirectional DC/DC converter 8.

In the controller 12, the electric power measurement part 20 measures the supply electric power, which is supplied from the system power supply 2 to the inverter 6, and outputs the measurement result to the discharge controller 22.

The electric storage controller 24 controls the charge-discharge circuit 8 to store the regenerative energy or the supply electric energy from the system power supply in the electric storage device 10.

The electric power waveform acquisition part 28 outputs a previously-acquired electric power waveform of the supply electric power, which is supplied from the system power supply 2 to the inverter 6, to the threshold calculator 26.

The threshold calculator 26 calculates a peak assist discharge start threshold that is of start timing of a peak assist discharge based on the electric power waveform output from the electric power waveform acquisition part 28 and the peak assist energy, which is stored in the electric storage device 10 by the electric storage controller 24. The threshold calculator 26 outputs the calculated peak assist discharge start threshold to the discharge controller 22. In the embodiment, the peak assist discharge means discharge control that assists the supply of the peak electric energy to the load instead of the system power supply 2. The peak assist energy means the electric energy that is discharged during the peak assist discharge.

The discharge controller 22 controls the charge-discharge circuit 8 to discharge the peak assist energy from the electric storage device 10 when determining that the supply electric power, which is supplied from the system power supply 2 and measured by the electric power measurement part 20, is greater than or equal to the calculated peak assist discharge start threshold.

Before the peak assist discharge is initially performed, namely, before the motor 4 is driven by the supply electric power supplied from the system power supply 2, the electric storage controller 24 controls the charge-discharge circuit 8 to store the peak assist energy in the electric storage device 10. The electric storage controller 24 controls the charge-discharge circuit 8 to charge the regenerative energy in the electric storage device 10 when the regenerative energy associated with the drive of the motor 4 is generated. The electric storage controller 24 issues an instruction to the discharge controller 22 to perform an excess energy discharge when an excess energy stored in the electric storage device 10 is greater than an excess energy threshold. In response to the instruction from the electric storage controller 24, the discharge controller 22 controls the charge-discharge circuit 8 to discharge the excess energy from the electric storage device 10.

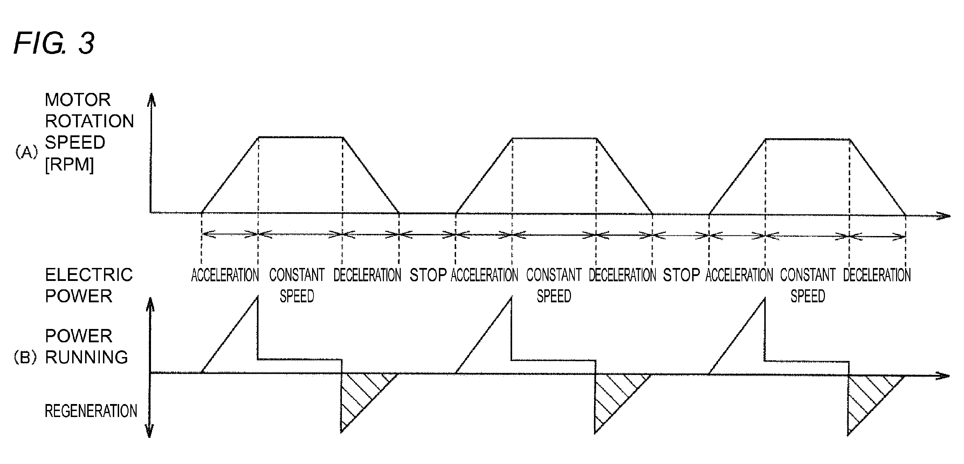

FIGS. 3A and 3B are schematic diagrams illustrating drive of a general motor and an electric power waveform supplied from the system power supply.

Referring to FIG. 3A, the motor repeats a cycle, in which the motor is accelerated to a target rotation speed, driven at a constant speed, and then decelerated.

During the drive of the motor, as illustrated in FIG. 3B, the electric power is supplied from the system power supply when the motor is accelerated in a power running state. A peak waveform is formed as the supply electric power waveform. A constant electric power is obtained at a constant speed. A regenerative power waveform is formed during the deceleration. That is, the peak waveform and the regenerative power waveform are alternately generated through motor acceleration-deceleration processing.

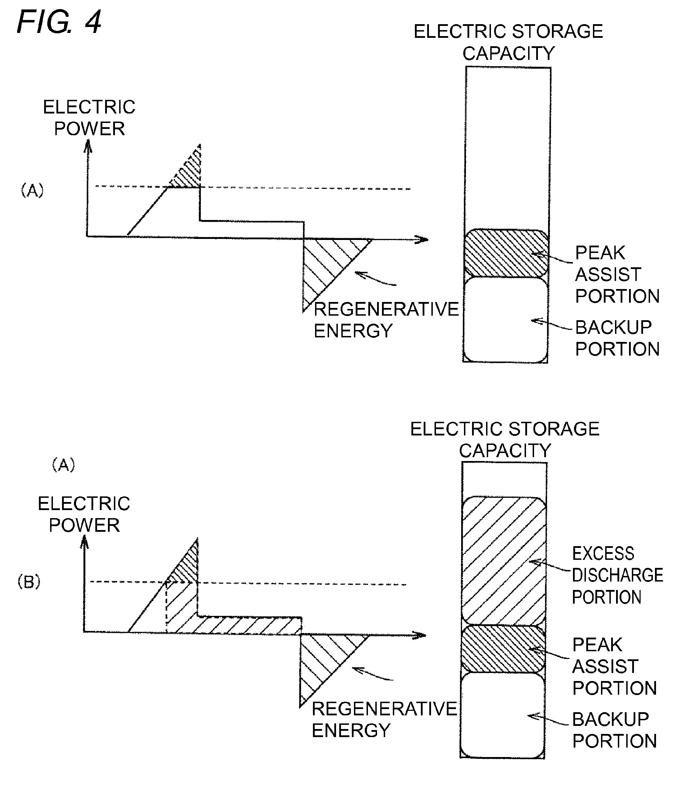

FIGS. 4A and 4B are views illustrating the peak assist discharge and the excess energy discharge according to the embodiment.

Referring to FIG. 4A, the performance of the peak assist discharge is illustrated. The right side of FIG. 4 schematically illustrates stored electric energy with respect to the electric storage capacity of the electric storage device 10.

An electric energy (backup energy) of a backup portion and an electric energy (peak assist energy) of a peak assist portion are stored in the electric storage device 10.

The electric energy of the backup portion means an electric energy that guarantees circuits, such as the load, in a predetermined period even if the electric energy supplied from the system power supply 2 is stopped. The electric energy of the backup portion is also used as a necessary electric energy in returning from the stop of the electric power supplied from the system power supply 2. The electric energy of the peak assist portion means an electric energy used to perform the peak assist discharge.

In the embodiment, the electric energy of the backup portion and the electric energy used to perform the peak assist discharge are set based on the electric storage capacity. The set electric energy of the peak assist portion is used in the peak assist discharge.

Referring to FIG. 4B, the performance of the excess energy discharge is illustrated. The right side of FIG. 4 schematically illustrates the stored electric energy with respect to the electric storage capacity of the electric storage device 10.

The electric energy of the backup portion, the electric energy of the peak assist portion, and an electric energy of an excess discharge portion are stored in the electric storage device 10.

The electric energy of the excess discharge portion means an electric energy used to perform an excess discharge. That is, in association with the drive of the motor, the regenerative energy is stored in the electric storage device 10, and the electric energy of the peak assist portion in the regenerative energy is discharged. The remaining electric energy of the regenerative energy is stored as the excess energy. In the embodiment, the electric energy is set in performing the excess discharge, and the set electric energy is used in the excess discharge. The excess discharge includes the peak assist discharge, and the electric energy of the peak assist portion is used in the peak assist discharge.

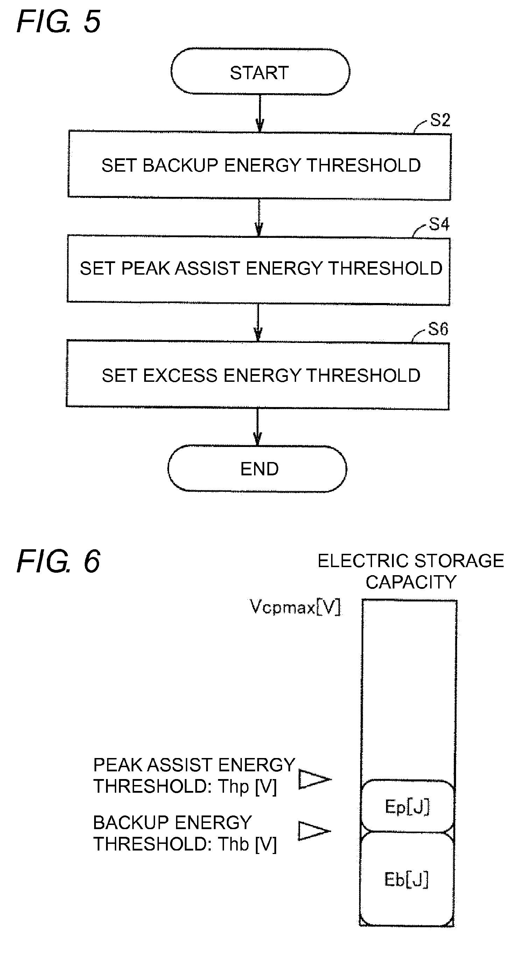

FIG. 5 is a flowchart illustrating a threshold setting of the electric storage device according to the embodiment.

Referring to FIG. 5, in the electric storage device 10 of the embodiment, various voltage thresholds are set to the electric storage capacity of the electric storage device 10. It is assumed that Vcpmax is a maximum voltage value stored in the electric storage device 10. The electric energy stored in the electric storage device 10 can be calculated by measuring the voltage value at the electric storage device 10.

A backup energy threshold is set (Step S2). The backup energy threshold means a voltage threshold with respect to the electric storage capacity necessary for the electric energy of the backup portion.

A peak assist energy threshold is set (Step S4). The peak assist energy threshold means a voltage threshold with respect to the electric storage capacity necessary for the electric energy of the peak assist portion.

An excess energy threshold is set (Step S6). The excess energy threshold means a voltage threshold with respect to the electric storage capacity that is a criterion for starting the excess discharge. The excess discharge is started when the voltage value at the electric storage device 10 is greater than the voltage threshold.

Then the processing is ended (END).

FIG. 6 is a view illustrating settings of the backup energy threshold and the peak assist energy threshold with respect to an electric storage capacity of the electric storage device 10.

Referring to FIG. 6, an electric energy of a backup portion Eb [J] is previously fixed, and a backup energy threshold Thb [V] is set with respect to the electric energy. In the embodiment, an electric energy of a peak assist portion Ep [J] can arbitrarily be set. It is assumed that electric energy Ep [J] is smaller than regenerative electric energy Er [J] (> Ep [J]) that is stored as the regenerative energy. It is assumed that the regenerative electric energy Er [J] is previously measured. A peak assist energy threshold Thp [V] with respect to the electric energy is set according to the electric energy of the peak assist portion Ep [J].

In the embodiment, before the peak assist discharge is initially performed, namely, before the motor 4 is driven by the supply electric energy supplied from the system power supply 2, the system power supply 2 charges the electric energy of the backup portion Eb [J] and the electric energy of the peak assist portion Ep [J] in the electric storage device 10. Specifically, the system power supply 2 initially charges the electric energy in the electric storage device 10 until a voltage level at the electric storage device 10 reaches the peak assist energy threshold Thp [V]. In the embodiment, by way of example, the electric storage device 10 is charged by the DC voltage that is obtained by the DC conversion performed in the inverter 6.

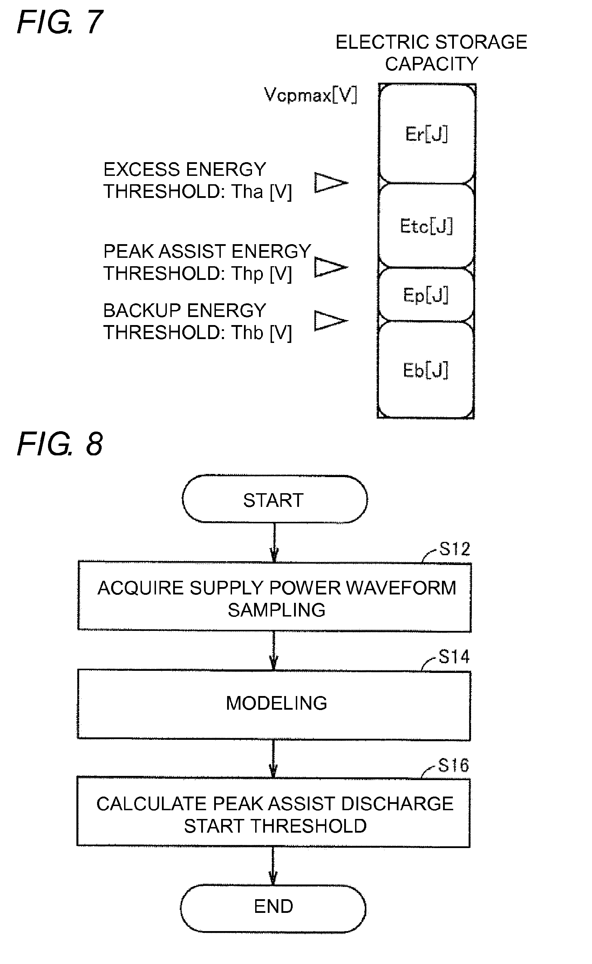

FIG. 7 is a view illustrating a setting of an excess energy threshold with respect to the electric storage capacity of the electric storage device 10.

Referring to FIG. 7, although the electric energy of the excess discharge portion Etc [J] can arbitrarily set, there is explained the case that the excess energy threshold is set such that the electric storage capacity is effectively utilized at the maximum in the embodiment.

More specifically, the excess energy threshold Tha [V] is set such that room for the regenerative electric energy Er [J] is generated with respect to the maximum electric storage capacity. That is, even if the voltage level at the electric storage device 10 rises near the excess energy threshold Tha [V], and even if the regenerative energy is stored, the excess energy threshold Tha is set such that the regenerative energy is securely stored in the electric storage device 10, whereby the regenerative energy can be stored in the electric storage device 10 so as not to go to waste.

Assuming that Ccp is an electrostatic capacitance of a capacitor, letting $(Ccp \times Vcpmax^2)/2 - Er \geq Ep + Eb$ can set the excess energy threshold Tha based on the following equation.

$$\text{Excess energy threshold Tha} = (Vcpmax^2 - 2Er)^{1/2}.$$

On the other hand, in the case of $(Ccp \times Vcpmax^2)/2 - Er < Ep + Eb$, Excess energy threshold Tha = Thp is obtained because of the large peak assist energy threshold.

Therefore, in the case that the regenerative energy is generated, the excess discharge including the peak assist discharge is performed, the room for the regenerative electric energy Er [J] can be ensured with respect to the electric storage capacity, which allows the regenerative energy to be effectively stored.

FIG. 8 is a flowchart illustrating calculation of a threshold of electric energy at which the peak assist discharge is started according to the embodiment.

Referring to FIG. 8, the supply electric power waveform is sampled (Step S12).
Modeling is performed to the supply electric power waveform (Step S14). Specifically, the modeling is performed to the supply electric power waveform to extract a triangle in which the peak waveform is formed.

The threshold of the electric energy, at which the peak assist discharge is started, is calculated from the extracted triangle and the electric energy of the peak assist portion (Step S16).

Then the processing is ended (END).

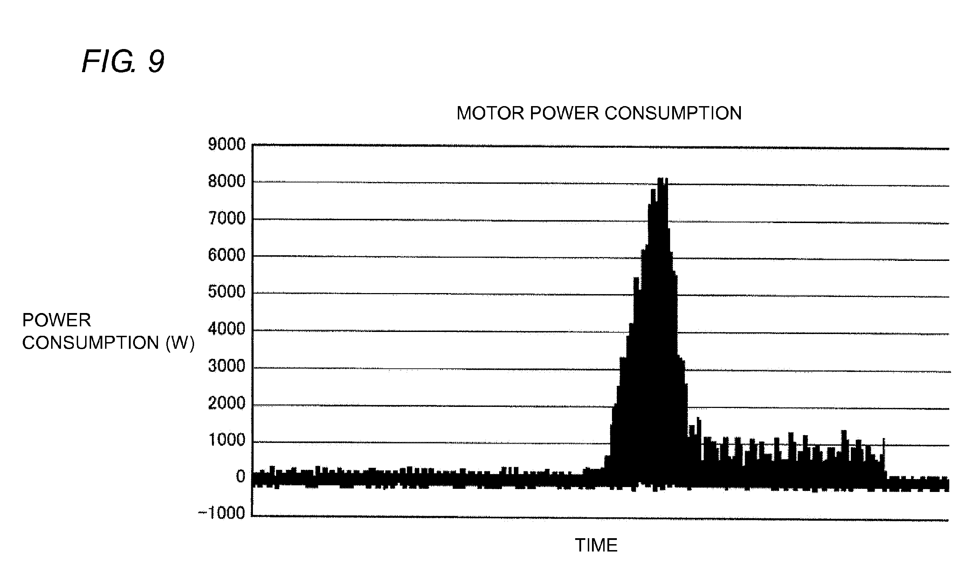

FIG. 9 is a view illustrating an example of a supply electric power waveform in the case that the system power supply is supplied to a motor.

Referring to FIG. 9, the supply electric power waveform in which a peak is formed during the acceleration is obtained in the sampling in Step S12 in FIG. 8.

At this point, an outline of the supply electric power waveform in which the peak waveform is formed can be approximated to a right triangle.

In the case that the system power supply is supplied to the motor, it is assumed that the supply electric power waveform is previously acquired before the threshold is calculated. For example, before the control of the electric storage device control system according to the embodiment is performed, the electric power is supplied from the system power supply 2 to the inverter 6, and the electric power is measured with the clamp type watt meter 13, which allows the supply electric power waveform to be sampled. At this point, the regenerative electric energy can be calculated by also acquiring the regenerative power waveform. Even if the measurement is not actually performed, data of the supply electric power waveform that is of the model is previously stored in the memory 32, and the data may be used.

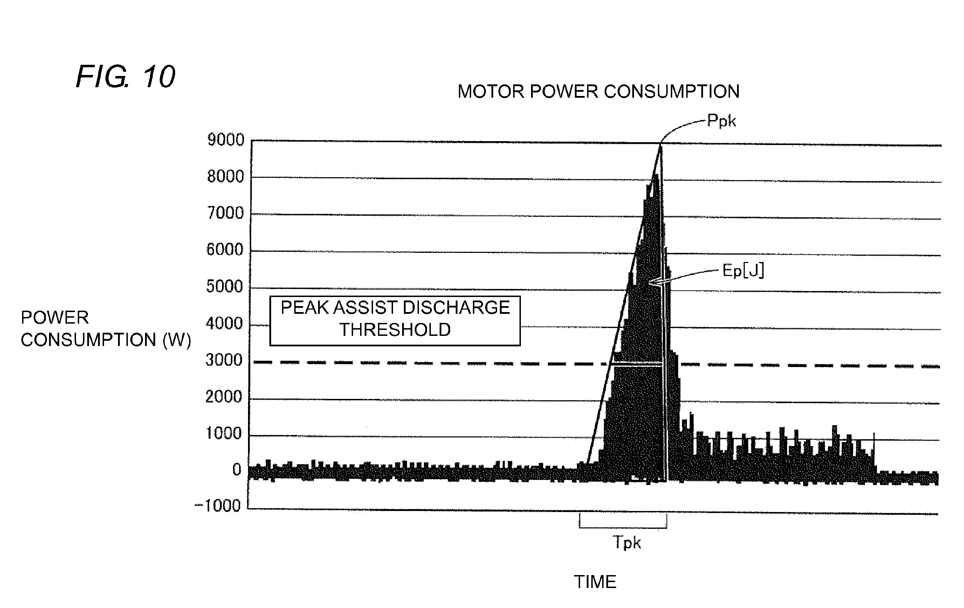

FIG. 10 is a view illustrating an example of modeling of the supply electric power waveform in the case that the system power supply is supplied to the motor.

Referring to FIG. 10, the modeling is performed in Step S14 in FIG. 8.

As illustrated in FIG. 10, the supply electric power waveform is extracted while approximated to the right triangle in which the peak waveform is formed.

The threshold of the electric energy, at which the peak assist discharge is started, is calculated such that the electric energy of the peak assist portion Ep[J] is supplied to a region where the peak of the right triangle is formed.

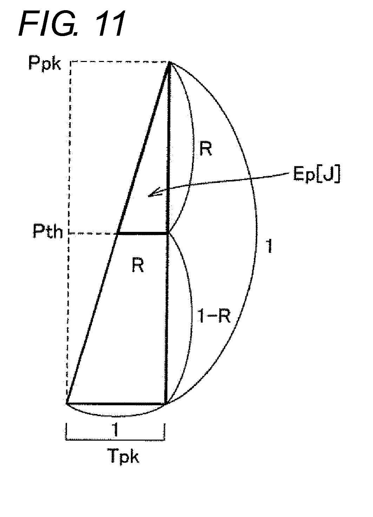

FIG. 11 is a view illustrating the calculation of the threshold of the electric energy at which the peak assist discharge is started.
Referring to FIG. 11, the value (threshold) of the electric energy (motor power consumption) supplied from the system power supply is calculated in the case that the electric energy of the peak assist portion Ep[J] is supplied to the peak portion of the modeled right triangle. The value becomes start timing of the supply of the electric power.

It is assumed that the electric energy of the peak assist portion Ep[J] is supplied to the small right triangle constituting the peak portion.

Assuming that R is a ratio of sides of the right triangle, a threshold (peak assist discharge start threshold) Pth of the electric energy, at which the peak assist discharge is started, is calculated based on the following equation.

$$Pth = Ppk \times (1 - R) = Ppk \times (1 - (2Ep/(Ppk \times Tpk))^{1/2})$$

Here, Ppk is the peak portion of the modeled right triangle, namely, the maximum electric energy value. Tpk is the acceleration period of the motor.

The peak assist discharge is started when the value of the electric power supplied from the system power supply 2 reaches the calculated peak assist discharge start threshold Pth.

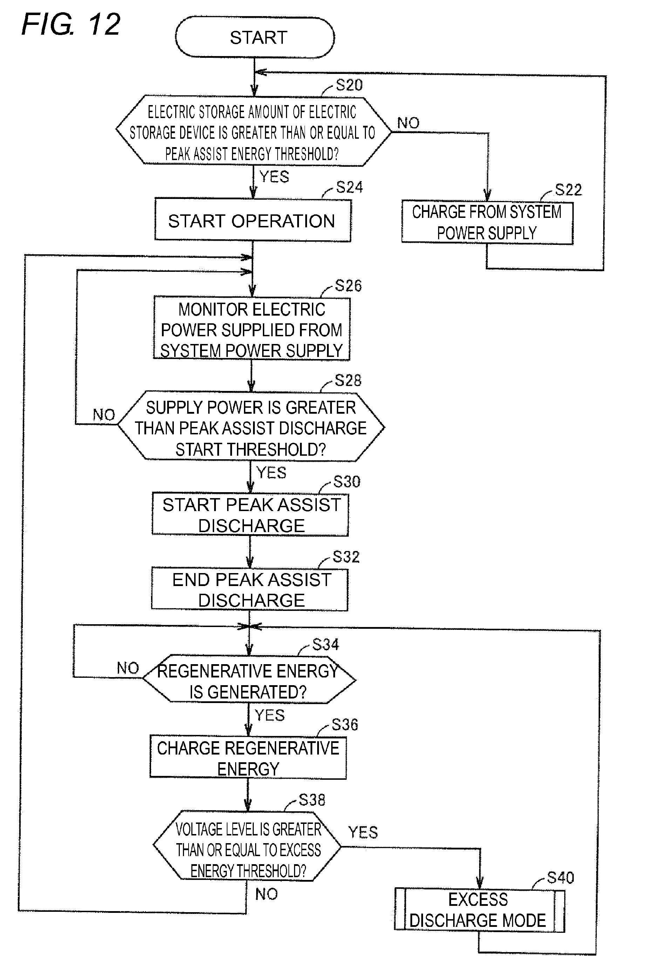

FIG. 12 is a flowchart illustrating an operation of an electric storage device control system according to the embodiment.

Referring to FIG. 12, it is determined whether the electric energy stored in the electric storage device is greater than or equal to the peak assist energy threshold (Step S20). Specifically, the voltage level at the electric storage device 10 is measured to determine whether the voltage level is greater than or equal to the set peak assist energy threshold Thp.

When the electric energy stored in the electric storage device is less than the peak assist energy threshold (NO in Step S20), the system power supply charges the electric energy in the electric storage device (Step S22). The flow returns to Step S20.

That is, because it is necessary to store the electric energy of the backup portion and the electric energy of the peak assist portion in the electric storage device 10, the processing is repeated until the electric energy stored in the electric storage device 10 is greater than or equal to the peak assist energy threshold Thp.

When the electric energy stored in the electric storage device is greater than or equal to the peak assist energy threshold (YES in Step S20), the operation is started (Step S24). Specifically, a motor control device (not illustrated) is driven to supply the electric power to the inverter 6 from the system power supply 2, thereby driving the motor 4.

The supply electric power supplied from the system power supply is monitored (Step S26). Specifically, the value of the supply electric power supplied from the system power supply 2 is measured with the clamp type watt meter 13.

Next, it is determined whether the supply electric power supplied from the system power supply 2 is greater than the peak assist discharge start threshold (Step S28). Specifically, it is determined whether the measured electric power value is greater than the calculated peak assist discharge start threshold Pth.

The flow returns to Step S26 to repeat the processing until the supply electric power is greater than the peak assist discharge start threshold.

When the supply electric power is greater than the peak assist discharge start threshold (YES in Step S28), the peak assist discharge is started (Step S30). Specifically, the electric storage device 10 supplies the electric energy of the peak assist portion to the inverter 6. Specifically, the electric energy of the peak assist portion can be discharged based on whether the voltage level at the electric storage device 10 decreases by a difference between the peak assist energy threshold Thp and the backup energy threshold Thb.

After the electric energy of the peak assist portion is discharged, the peak assist discharge is ended (Step S32).

Then, it is determined whether the regenerative energy is generated (Step S34). Specifically, the voltage level at the internal node of the inverter 6 is monitored, and whether the regenerative energy is generated is determined based on whether the voltage level is inverted.

When the regenerative energy is generated (YES in Step S34), the generated regenerative energy is charged in the electric storage device 10 (Step S36).

After that, it is determined whether the electric energy stored in the electric storage device 10 is greater than or equal to the excess energy threshold (Step S38). Specifically, it is determined whether the voltage level at the electric storage device 10 is greater than or equal to the excess energy threshold Tha.

When the electric energy stored in the electric storage device 10 is greater than or equal to the excess energy threshold (YES in Step S38), the flow goes to Step S40.

That is, the flow goes to an excess discharge mode (Step S40). On the other hand, when the electric energy stored in the electric storage device 10 is less than the excess energy threshold (NO in Step S38), the flow returns to Step S26.

The subsequent pieces of processing are identical to the above pieces of processing. Specifically, when the voltage level at the electric storage device 10 is less than the excess energy threshold Tha, the electric storage device 10 is charged until the voltage level at the electric storage device 10 is greater than or equal to the excess energy threshold Tha.

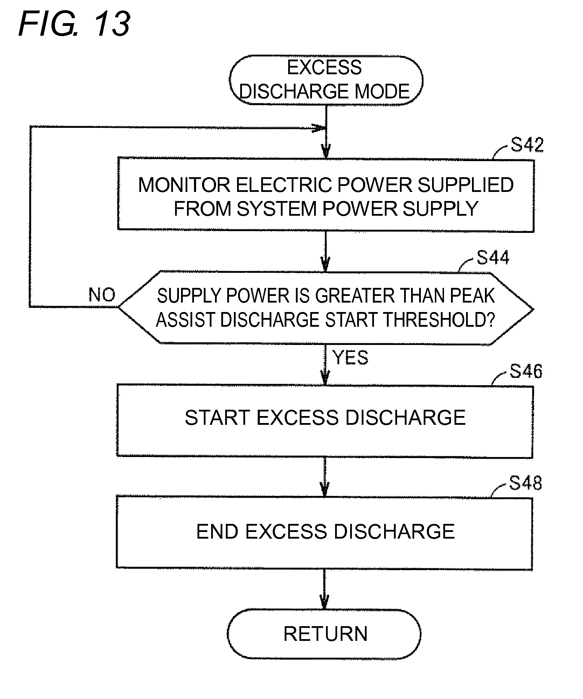

FIG. 13 is a flowchart illustrating the excess discharge mode according to the embodiment;

Referring to FIG. 13, the supply electric power supplied from the system power supply is monitored (Step S42). Specifically, the value of the supply electric power supplied from the system power supply 2 is measured with the clamp type watt meter 13.

Next, it is determined whether the supply electric power is greater than the peak assist discharge start threshold (Step S44).

The flow returns to Step S42 to repeat the processing until the supply electric power is greater than the peak assist discharge start threshold.

When the supply electric power is greater than the peak assist energy threshold (YES in Step S44), the excess discharge is started (Step S46). Specifically, the excess discharge includes the peak assist discharge, and the electric storage device 10 supplies the electric energy of the peak assist portion to the inverter 6. In addition to the electric energy of the peak assist portion, the general electric power supplied from the system power supply 2 is supplied from the excess energy of the electric storage device 10. Specifically, the excess discharge can be performed until the voltage level at the electric storage device 10 reaches the backup energy threshold Thb.

After the electric energy of the excess discharge portion is discharged, the excess discharge is ended (Step S48). The excess discharge is ended even if the regenerative energy is generated in the middle of the excess discharge.

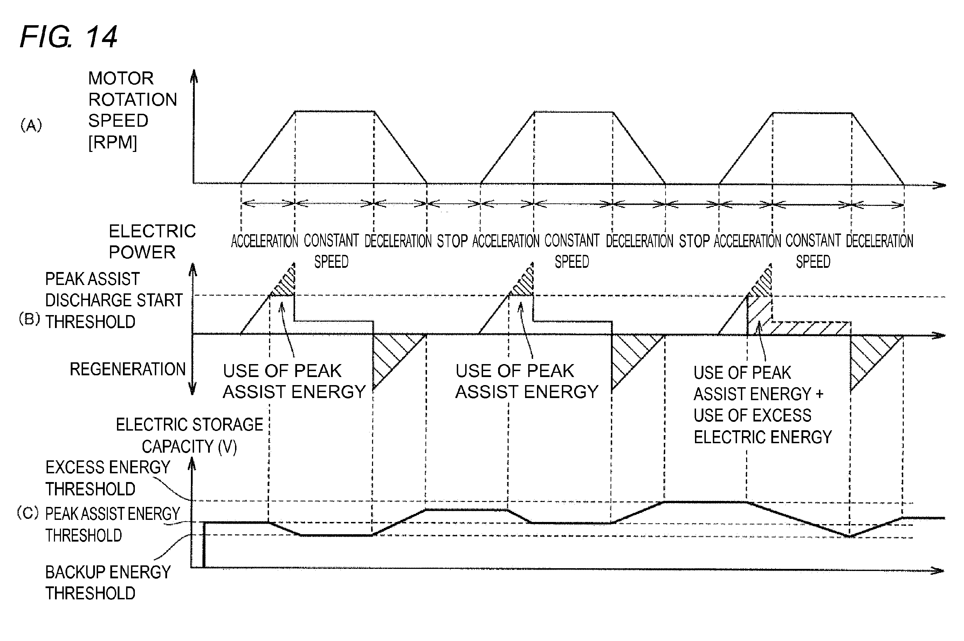

Then the processing is ended (RETURN). The flow returns to Step S34. FIGS. 14A, 14B, and 14C are views illustrating a relationship among the drive of the motor, the electric power waveform supplied from the system power supply, and the electric storage capacity of the electric storage device according to the embodiment.

Referring to FIG. 14A, the motor repeats a cycle, in which the motor is accelerated to the target rotation speed, driven at a constant speed, and then decelerated. The description in FIG. 14A is the same as the description in FIG. 3A.

Referring to FIG. 14B, during the drive of the motor, in the case that the supply electric power supplied from the system power supply 2 is greater than the peak assist discharge start threshold, the electric energy is compensated by the peak assist discharge from the electric storage device 10 in addition to the system power supply. Referring to FIG. 14C, as described above, the electric energy is previously stored to the peak assist energy threshold in the electric storage device 10. In association with the peak assist discharge, the electric energy of the electric storage device 10 decreases by the electric energy of the peak assist portion. In association with the generation of the regenerative energy, the regenerative energy is stored in the electric storage device 10 to raise the voltage level of the electric storage capacity.

During the second acceleration, in the case that the supply electric energy supplied from the system power supply 2 is greater than the peak assist discharge start threshold again, the electric energy is compensated by the peak assist discharge from the electric storage device 10. At this point, in association with the peak assist discharge, the electric energy of the electric storage device 10 decreases by the electric energy of the peak assist portion. In association with the generation of the regenerative energy, the regenerative energy is stored in the electric storage device 10 to raise the voltage level of the electric storage capacity again.

At this point, the voltage level at the electric storage capacity is greater than or equal to the excess energy threshold. That is, the flow goes to an excess discharge mode.

During the third acceleration, in the case that the supply electric power supplied from the system power supply 2 is greater than the peak assist discharge start threshold again, the peak assist electric energy is supplied by the excess discharge from the electric storage device 10. The excess energy is supplied instead of the system power supply 2.

In FIG. 14C, the excess energy is supplied to decrease the voltage level at the electric storage device 10 to the backup energy threshold.

In association with the generation of the regenerative energy, the regenerative energy is stored in the electric storage device 10 to raise the voltage level of the electric storage capacity. The processing is repeated in the same manner.

In the embodiment, the supply electric power supplied from the system power supply 2 is monitored, and the peak assist discharge is started when the supply electric power is greater than the peak assist discharge start threshold. Therefore, unlike the related art, it is not necessary to detect the momentary voltage drop of the electric power system, but the peak assist discharge can easily be performed. The regenerative energy is surely stored and discharged in and from the electric storage device, so that the efficient system can be constructed without generating the wasteful storage electric energy.

In the excess discharge mode, the peak assist discharge start threshold is used as a trigger to start the excess discharge. However, there is no particular limitation to the excess discharge mode. Alternatively, the excess discharge may be started before the peak assist discharge start threshold, or the excess discharge may be started after the peak assist discharge.

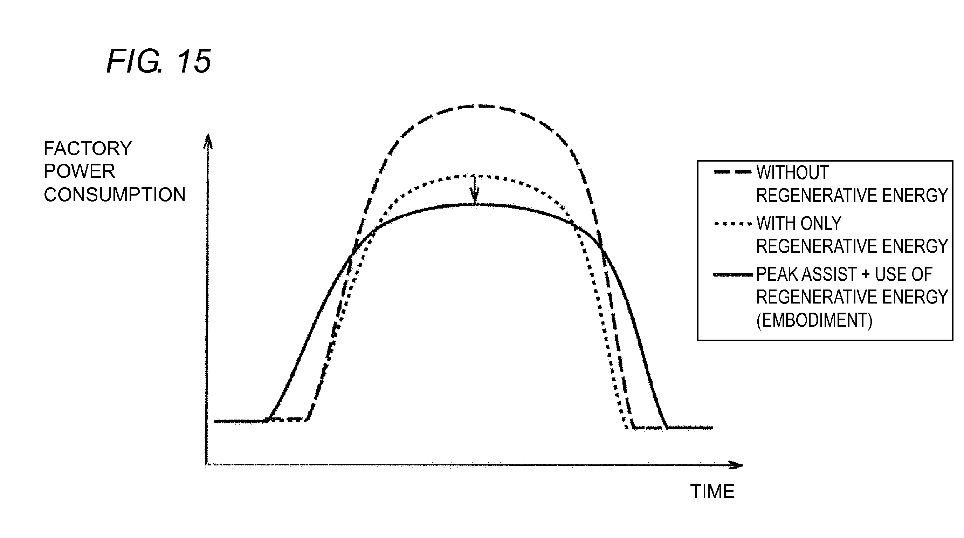

FIG. 15 is a view illustrating factory power consumption in the case of using the electric storage device control system according to the embodiment and in the case of a comparative example.

Referring to FIG. 15, as to the comparative example, the peak of the factory power consumption is maximized in the case that the regenerative energy is not used. On the other hand, in the case that the regenerative energy is used, the peak value can be suppressed compared with the case that the regenerative energy is not used. In the configuration according to the embodiment, the regenerative energy is used, and the peak assist discharge is performed, which allows the peak value to be further suppressed. With the system of the embodiment, the maximum value of the electric energy supplied from the system power supply can be decreased. That is, cost can be reduced by decreasing the maximum electric energy of the electric energy purchased from a power producer.

In the embodiment, the EDLC is used as the electric storage device. Alternatively, any device may be used as long as the device can store and manage the electric energy. For example, a lithium-ion capacitor (LiC) or a lithium-ion battery may be used instead of the EDLC. As needed basis, a range of use of the capacity may be restricted according to characteristics of the electric storage device. A State of Charge (SOC) is estimated according to the characteristics of the electric storage device, and the electric storage amount may be managed based on the estimation result.

In the embodiment, the inverter 6 connected to the motor 4 is described. Alternatively, the embodiment can also be applied to mechanisms, such as a servo driver connected to a servo motor, in which the regenerative energy is generated according to a given rule. For example, the embodiment can be applied to either the case that the motor 4 is used as horizontal axis drive or the case that the motor 4 is used as vertical axis drive.

In the embodiment, the supply electric power supplied from the system power supply 2 is measured with the clamp type watt meter 13. The watt meter is not limited to the clamp type watt meter, but any type watt meter may be used as long as the supply electric power supplied from the system power supply 2 is measured. For example, the supply electric power supplied from the system power supply 2 may be measured based on the DC voltage at the inverter 6 and the current passing through the inverter 6.

The embodiment is disclosed only by way of example, and the present invention is not limited to the embodiment. The scope of the present invention is defined by claims, and the present invention includes the meaning equivalent to the claims and all the changes within the claims.

INDEX TO REFERENCE NUMERALS

2 ... system power supply, 4 ... motor, 6 ... inverter, 8 ... bidirectional DC/DC converter, 10 ... electric storage device, 12 ... controller, 13 ... clamp type watt meter, 30 ... CPU, 32 ... memory, 34, 38, 40 ... ADC, 36 ... PWM circuit.

**Claims**

1.  An electric storage device control method for supplying an electric energy stored in an electric storage device to a driving circuit of a load in addition to an electric power of an AC power system, the electric storage device control method comprising the steps of:

    measuring a value of electric power supplied from the AC power system to the driving circuit;
    acquiring a waveform of a supply electric power supplied from the AC power system to the driving circuit;
    storing a peak assist energy in the electric storage device from a regenerative energy from the driving circuit or the AC power system, which assists a peak electric energy supplied to the load;
    calculating an electric power threshold, at which a peak assist discharge from the electric storage device is started, based on the waveform of the supply electric power and the stored peak assist energy; and
    starting the peak assist discharge from the electric storage device when the measured electric power is greater than the electric power threshold.

2.  The electric storage device control method according to claim 1, wherein the electric storage device is connected to the AC power system, and the storage step includes the step of charging a portion of the peak assist energy in the electric storage device from the AC power system before the electric energy is supplied from the AC power system to the driving circuit.

3.  The electric storage device control method according to claim 2, wherein the peak assist energy stored in the electric storage device is set smaller than the regenerative energy from the driving circuit.

4.  The electric storage device control method according to claim 3, wherein a remaining excess energy in which the peak assist energy is subtracted from the regenerative energy is stored in the electric storage device, and the electric storage device control method further comprises the steps of:

    measuring the amount of the excess energy stored in the electric storage device;
    determining whether the amount of the excess energy stored in the electric storage device is greater than or equal to predetermined electric energy; and
    supplying the excess energy from the electric storage device to the driving circuit instead of the AC power system when the amount of the excess energy stored in the electric storage device is greater than or equal to the predetermined electric energy.

5.  The electric storage device control method according to claim 4, wherein the predetermined electric energy is set such that the regenerative energy can be ensured from the driving circuit according to an electric storage capacity of the electric storage device.

6.  The electric storage device control method according to claim 1, wherein, in the step of measuring the value of the electric power, an alternating current supplied from the AC power system to the driving circuit is measured, and calculation is performed using the measured alternating current and a predetermined voltage of the AC power system.

7.  The electric storage device control method according to claim 1, wherein an output voltage and an output current of a DC circuit are measured in the step of measuring the value of the electric power, the DC circuit converting an AC voltage supplied from the AC power system provided between the AC power system and the driving circuit into a DC voltage.

8.  An electric storage device control device that supplies an electric energy stored in the electric storage device to a driving circuit of a load in addition to an electric power of an AC power system, the electric storage device control device comprising:

    an electric energy measurement part that measures a value of electric power supplied from the AC power system to the driving circuit;

an electric power waveform acquisition part that acquires a waveform of a supply electric power supplied from the AC power system to the driving circuit;

an electric storage controller that stores a peak assist energy in the electric storage device from a regenerative energy from the driving circuit or the AC power system, which assists a peak electric energy supplied to the load;

a threshold calculator that calculates an electric power threshold, at which a peak assist discharge from the electric storage device is started, based on the waveform of the supply electric power and the stored peak assist energy; and

a discharge controller that starts the peak assist discharge from the electric storage device when the electric power measured by the electric energy measurement part is greater than the electric power threshold.

9. An electric storage device control system comprising:

an electric storage device; and

an electric storage device control device that supplies an electric energy stored in the electric storage device to a driving circuit of a load in addition to an electric power of an AC power system, wherein the electric storage device control device includes:

an electric energy measurement part that measures a value of electric power supplied from the AC power system to the driving circuit;

an electric power waveform acquisition part that acquires a waveform of a supply electric power supplied from the AC power system to the driving circuit;

an electric storage controller that stores a peak assist energy in the electric storage device from a regenerative energy from the driving circuit or the AC power system, which assists a peak electric energy supplied to the load;

a threshold calculator that calculates an electric power threshold, at which a peak assist discharge from the electric storage device is started, based on the waveform of the supply electric power and the stored peak assist energy; and

a discharge controller that starts the peak assist discharge from the electric storage device when the electric power measured by the electric energy measurement part is greater than the electric power threshold.

**FIG. 1**

*FIG. 2*

## FIG. 3

(A) MOTOR ROTATION SPEED [RPM]

ACCELERATION | CONSTANT SPEED | DECELERATION | STOP | ACCELERATION | CONSTANT SPEED | DECELERATION | STOP | ACCELERATION | CONSTANT SPEED | DECELERATION

ELECTRIC POWER

(B) POWER RUNNING

REGENERATION

EP 2 639 921 A2

# FIG. 4

ELECTRIC STORAGE
CAPACITY

(A)

ELECTRIC
POWER

REGENERATIVE
ENERGY

PEAK
ASSIST
PORTION

BACKUP
PORTION

ELECTRIC STORAGE
CAPACITY

(A)

ELECTRIC
POWER

(B)

REGENERATIVE
ENERGY

EXCESS
DISCHARGE
PORTION

PEAK
ASSIST
PORTION

BACKUP
PORTION

## FIG. 5

```
        START

         │
         ▼
┌─────────────────────────────┐  ┌S2
│  SET BACKUP ENERGY THRESHOLD │
└─────────────────────────────┘
         │
         ▼
┌─────────────────────────────┐  ┌S4
│ SET PEAK ASSIST ENERGY THRESHOLD │
└─────────────────────────────┘
         │
         ▼
┌─────────────────────────────┐  ┌S6
│  SET EXCESS ENERGY THRESHOLD │
└─────────────────────────────┘
         │
         ▼
         END
```

## FIG. 6

ELECTRIC STORAGE
CAPACITY

Vcpmax[V]

PEAK ASSIST ENERGY
THRESHOLD: Thp [V]  ▷

BACKUP ENERGY
THRESHOLD: Thb [V]  ▷

Ep[J]

Eb[J]

## FIG. 7

ELECTRIC STORAGE
CAPACITY

Vcpmax[V]

Er[J]

EXCESS ENERGY
THRESHOLD: Tha [V] ▷

Etc[J]

PEAK ASSIST ENERGY
THRESHOLD: Thp [V] ▷

Ep[J]

BACKUP ENERGY
THRESHOLD: Thb [V] ▷

Eb[J]

## FIG. 8

START

↓

ACQUIRE SUPPLY POWER WAVEFORM
SAMPLING    S12

↓

MODELING    S14

↓

CALCULATE PEAK ASSIST DISCHARGE
START THRESHOLD    S16

↓

END

EP 2 639 921 A2

# FIG. 9

MOTOR POWER CONSUMPTION

POWER CONSUMPTION (W)

TIME

# FIG. 10

MOTOR POWER CONSUMPTION

EP 2 639 921 A2

*FIG. 11*

## FIG. 12

```
                        ( START )
                            │
                            ▼
                         ╱  S20  ╲
          ELECTRIC STORAGE AMOUNT OF ELECTRIC
          STORAGE DEVICE IS GREATER THAN OR EQUAL TO ─── NO ───┐
          PEAK ASSIST ENERGY THRESHOLD?                        │
                            │ YES                              │
                            ▼ ┌── S24                          ▼ ┌── S22
                   ┌─────────────────┐              ┌──────────────────┐
                   │ START OPERATION │              │ CHARGE FROM SYSTEM│
                   └─────────────────┘              │   POWER SUPPLY    │
                            │                        └──────────────────┘
                            ▼ ┌── S26
                   ┌─────────────────┐
                   │ MONITOR ELECTRIC│
                   │ POWER SUPPLIED  │
                   │ FROM SYSTEM     │
                   │ POWER SUPPLY    │
                   └─────────────────┘
                            │ ┌── S28
                            ▼
                       ╱        ╲
          NO ───  SUPPLY POWER IS GREATER
                  THAN PEAK ASSIST DISCHARGE
                     START THRESHOLD?
                            │ YES
                            ▼ ┌── S30
                   ┌─────────────────┐
                   │ START PEAK ASSIST│
                   │   DISCHARGE      │
                   └─────────────────┘
                            │ ┌── S32
                            ▼
                   ┌─────────────────┐
                   │ END PEAK ASSIST │
                   │   DISCHARGE     │
                   └─────────────────┘
                            │ ┌── S34
                            ▼
          NO ─── REGENERATIVE ENERGY
                    IS GENERATED?
                            │ YES
                            ▼ ┌── S36
                   ┌─────────────────┐
                   │ CHARGE          │
                   │ REGENERATIVE    │
                   │ ENERGY          │
                   └─────────────────┘
                            │ ┌── S38
                            ▼
                  VOLTAGE LEVEL IS GREATER ─── YES ───┐
                  THAN OR EQUAL TO EXCESS            │
                    ENERGY THRESHOLD?                ▼ ┌── S40
                            │ NO           ┌──────────────────┐
                                           │ EXCESS           │
                                           │ DISCHARGE MODE   │
                                           └──────────────────┘
```

## FIG. 13

EXCESS DISCHARGE MODE

S42
MONITOR ELECTRIC POWER SUPPLIED FROM SYSTEM POWER SUPPLY

S44
SUPPLY POWER IS GREATER THAN PEAK ASSIST DISCHARGE START THRESHOLD?

NO

YES

S46
START EXCESS DISCHARGE

S48
END EXCESS DISCHARGE

RETURN

## FIG. 14

(A) MOTOR ROTATION SPEED [RPM]

ACCELERATION CONSTANT DECELERATION STOP ACCELERATION CONSTANT DECELERATION STOP ACCELERATION CONSTANT DECELERATION
SPEED SPEED SPEED

ELECTRIC POWER

(B) PEAK ASSIST DISCHARGE START THRESHOLD

REGENERATION

USE OF PEAK ASSIST ENERGY

USE OF PEAK ASSIST ENERGY

USE OF PEAK ASSIST ENERGY + USE OF EXCESS ELECTRIC ENERGY

ELECTRIC STORAGE CAPACITY (V)

EXCESS ENERGY THRESHOLD

(C) PEAK ASSIST ENERGY THRESHOLD

BACKUP ENERGY THRESHOLD

EP 2 639 921 A2

FIG. 15

FACTORY
POWER
CONSUMPTION

TIME

WITHOUT
REGENERATIVE ENERGY

WITH ONLY
REGENERATIVE ENERGY

PEAK ASSIST + USE OF
REGENERATIVE ENERGY
(EMBODIMENT)

EP 2 639 921 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 2009232526 A